# EUROPÄISCHE PATENTSCHRIFT

(11) **EP 3 788 843 B1**
(45) Veröffentlichungstag und Bekanntmachung des Hinweises auf die Patenterteilung: **05.06.2024**
(21) Anmeldenummer: 19721853.0
(22) Anmeldetag: 17.04.2019
(51) Int. Cl.: H05B 6/12

(54) **INDUKTIONSENERGIEÜBERTRAGUNGSSYSTEM**
INDUCTION ENERGY TRANSMISSION SYSTEM
SYSTÈME DE TRANSFERT D'ÉNERGIE PAR INDUCTION

(30) Priorität: 04.05.2018 ES 201830438
(43) Veröffentlichungstag der Anmeldung: 10.03.2021
(73) Patentinhaber: BSH Hausgeräte GmbH, 81739 München (DE)
(72) Erfinder: CABEZA GOZALO, Tomas, 50010 Zaragoza (ES); LLORENTE GIL, Sergio, 50009 Zaragoza (ES)
(86) Internationale Anmeldenummer: PCT/IB2019/053160
(87) Internationale Veröffentlichungsnummer: WO 2019/211688

(56) Entgegenhaltungen:
- WO-A1-2013/098040
- WO-A1-2013/098240
- WO-A1-2014/016032
- JP-A- H05 108 172

## Beschreibung

Die Erfindung betrifft ein Induktionsenergieübertragungssystem nach dem Oberbegriff des Anspruchs 1 und ein Verfahren zu einem Betrieb eines Induktionsenergieübertragungssystems nach dem Oberbegriff des Anspruchs 12.

Aus dem Stand der Technik ist bereits ein Induktionsenergieübertragungssystem bekannt welches eine als Kochfeld ausgebildete Versorgungseinheit mit mehreren Versorgungsinduktionselementen aufweist, die in einem Betriebszustand Energie an eine Aufnahmeinduktionseinheit bereitstellen. Die Aufnahmeinduktionseinheit ist Teil des Induktionsenergieübertragungssystems und weist eine Aufnahmeeinheit mit mehreren Aufnahmeinduktionselementen auf. Die Aufnahmeinduktionselemente empfangen in dem Betriebszustand Energie von den Versorgungsinduktionselementen und versorgen mit einem Teil der von den Versorgungsinduktionselementen aufgenommenen Energie eine weitere Einheit der Aufnahmeeinheit. Eine Steuereinheit des Induktionsenergieübertragungssystems zieht zu der Energieversorgung der weiteren Einheit alle Aufnahmeinduktionselemente der Aufnahmeeinheit heran.

WO 2014/016032 A1 (ARCELIK AS [TR]; TEZEL YAGIZ [TR] ET AL.) 30. Januar 2014 (2014-01-30) beschreibt wie eine drahtlose Datenübertragung in einem Induktionsübertragungssystem ausgestaltet wird.

Die Aufgabe der Erfindung besteht insbesondere darin, eine gattungsgemäße Vorrichtung mit verbesserten Eigenschaften hinsichtlich einer Energieversorgung bereitzustellen. Die Aufgabe wird erfindungsgemäß durch die Merkmale der Ansprüche 1 und 12 gelöst, während vorteilhafte Ausgestaltungen und Weiterbildungen der Erfindung den Unteransprüchen entnommen werden können.

Die Erfindung geht aus von einem Induktionsenergieübertragungssystem, insbesondere von einem Induktionsgarsystem und vorteilhaft von einem Induktionskochfeldsystem, insbesondere mit zumindest einer Versorgungseinheit, welche insbesondere zumindest ein Versorgungsinduktionselement aufweist, das insbesondere zu einer Bereitstellung von Energie vorgesehen ist, und mit zumindest einer Aufnahmeeinheit, welche zumindest zwei Aufnahmeinduktionselemente aufweist, die zu einem Empfang von Energie von zumindest einem Versorgungsinduktionselement zumindest einer Versorgungseinheit vorgesehen sind und welche zu einer Energieversorgung zumindest einer weiteren Einheit vorgesehen sind.

Es wird vorgeschlagen, dass das Induktionsenergieübertragungssystem zumindest eine Steuereinheit aufweist, welche dazu vorgesehen ist, in Abhängigkeit einer von dem Versorgungsinduktionselement bereitgestellten Energie eine unterschiedliche Anzahl an Aufnahmeinduktionselementen zu der Energieversorgung der weiteren Einheit heranzuziehen.

Durch die erfindungsgemäße Ausgestaltung kann vorteilhaft eine optimierte Energieversorgung erreicht werden. Insbesondere kann ein hoher Bedienkomfort erreicht werden, und zwar insbesondere in Bezug auf eine hohe Funktionstüchtigkeit und/oder eine optimierte Energieversorgung der weiteren Einheit. Eine zu der Energieversorgung der weiteren Einheit herangezogene und/oder bereitgestellte Spannung kann insbesondere wenigstens im Wesentlichen konstant gehalten werden, wodurch die weitere Einheit insbesondere in einem optimierten und/oder für die weitere Einheit zugeschnittenen Spannungsbereich betrieben werden kann. Einer Überlastung insbesondere der Aufnahmeinduktionselemente und/oder zumindest eines Spannungsreglers der Aufnahmeeinheit kann insbesondere vermieden werden, wodurch insbesondere eine funktionstüchtige und/oder langlebige Ausgestaltung erzielt werden kann. Insbesondere kann eine geringe Wahrscheinlichkeit eines Defekts der weiteren Einheit ermöglicht werden. Es kann insbesondere eine hohe Effizienz ermöglicht werden. Insbesondere können geringe elektrische Verluste erzielt werden.

Unter einem "Induktionsenergieübertragungssystem", insbesondere unter einem "Induktionsgarsystem" und vorteilhaft unter einem "Induktionskochfeldsystem", soll insbesondere ein System verstanden werden, welches eine Hauptfunktion in Form einer Energieübertragung aufweist. Insbesondere weist das Induktionsenergieübertragungssystem zumindest eine Versorgungseinheit, insbesondere zumindest ein Induktionsgargerät und vorteilhaft zumindest ein Induktionskochfeld, auf. Die Versorgungseinheit weist insbesondere zumindest ein Versorgungsinduktionselement auf, welches insbesondere in wenigstens einem Betriebszustand Energie, insbesondere zum Zweck einer Energieübertragung, an die Aufnahmeeinheit bereitstellt. Beispielsweise könnte das Induktionsenergieübertragungssystem als ein Induktionshandwerkzeugmaschinensystem ausgebildet sein. Insbesondere könnte die Versorgungseinheit und/oder die Aufnahmeeinheit als eine Handwerkzeugmaschine, wie beispielsweise ein Bohrer und/oder ein Elektroschrauber und/oder ein Bohrhammer und/oder eine Säge, ausgebildet sein. Alternativ oder zusätzlich könnte die Versorgungseinheit und/oder die Aufnahmeeinheit als ein Transformator ausgebildet sein. Das Induktionsenergieübertragungssystem könnte insbesondere für zumindest ein selbstfahrendes Arbeitsgerät und/oder für zumindest eine Fernsteuerung und/oder für zumindest eine Fernbedienung vorgesehen sein. Insbesondere könnte die Aufnahmeeinheit als ein selbstfahrendes Arbeitsgerät und/oder als eine Fernsteuerung und/oder als eine Fernbedienung ausgebildet sein. Das selbstfahrende Arbeitsgerät könnte beispielsweise als ein selbstfahrender Rasenmäher und/oder als ein selbstfahrender Staubsauger ausgebildet sein. Die Fernsteuerung und/oder die Fernbedienung könnte insbesondere zu einer Bedienung und/oder zu einer Steuerung zumindest einer Jalousie und/oder zumindest eines Elektrogeräts, insbesondere zumindest eines Haushaltselektrogeräts, und/oder zumindest eines Modellobjekts, wie beispielsweise eines Modellautos und/oder eines Modellflugzeugs und/oder eines Modellboots, vorgesehen sein. Vorzugsweise ist das Induktionsenergieübertragungssystem als ein Induktionsgarsystem ausgebildet. Beispielsweise könnte das Induktionsenergieübertragungssystem als ein Induktionsbackofensystem und/oder als ein Induktionsgrillsystem ausgebildet sein. Insbesondere könnte die Versorgungseinheit und/oder die Aufnahmeeinheit als ein Induktionsbackofen und/oder als ein Induktionsgrill ausgebildet sein. Vorteilhaft ist das Induktionsenergieübertragungssystem als ein Induktionskochfeldsystem ausgebildet. Die Versorgungseinheit und/oder die Aufnahmeeinheit ist insbesondere als ein Induktionskochfeld ausgebildet.

Unter einer "Versorgungseinheit" soll insbesondere eine Einheit verstanden werden, welche in wenigstens einem Betriebszustand induktiv Energie bereitstellt und welche insbesondere eine Hauptfunktion in Form einer Energiebereitstellung aufweist. Zu der Bereitstellung von Energie weist die Versorgungseinheit insbesondere zumindest ein Versorgungsinduktionselement auf, welches insbesondere zumindest eine Spule, insbesondere zumindest eine Primärspule, aufweist und welches insbesondere in dem Betriebszustand induktiv Energie bereitstellt.

Unter einem "Induktionselement" soll insbesondere ein Element verstanden werden, welches in wenigstens einem Betriebszustand Energie insbesondere zum Zweck einer induktiven Energieübertragung bereitstellt und/oder aufnimmt. Insbesondere stellt in dem Betriebszustand ein als Versorgungsinduktionselement ausgebildetes Induktionselement Energie insbesondere zum Zweck einer induktiven Energieübertragung bereit. Das Versorgungsinduktionselement könnte insbesondere zumindest eine Spule, insbesondere zumindest eine Primärspule, aufweisen, welche insbesondere zu einer induktiven Energieübertragung an zumindest eine Sekundärspule vorgesehen sein könnte. Die Sekundärspule könnte beispielsweise Teil der Aufnahmeeinheit sein, insbesondere zumindest eines Aufnahmeinduktionselements der Aufnahmeeinheit. Insbesondere nimmt in dem Betriebszustand ein als Aufnahmeinduktionselement ausgebildetes Induktionselement Energie insbesondere zum Zweck einer induktiven Energieübertragung auf, und zwar insbesondere von dem Versorgungsinduktionselement. Zumindest eines der und vorteilhaft beide Aufnahmeinduktionselemente könnte insbesondere zumindest eine Spule, insbesondere zumindest eine Sekundärspule, aufweisen, welche insbesondere zu einer induktiven Energieaufnahme von dem Versorgungsinduktionselement vorgesehen sein könnte.

Zumindest eines der Induktionselemente, insbesondere das Versorgungsinduktionselement und/oder zumindest eines der Aufnahmeinduktionselemente, könnte beispielsweise in zumindest zwei Höhenlagen und/oder Ebenen relativ zu einer Aufstellplatte angeordnet sein. Insbesondere könnte zumindest eines der Induktionselemente, insbesondere das Versorgungsinduktionselement und/oder zumindest eines der Aufnahmeinduktionselemente, zumindest einen ersten Abschnitt mit einer ersten Haupterstreckungsebene und zumindest einen zweiten Abschnitt mit einer zweiten Haupterstreckungsebene aufweisen, welche von der ersten Haupterstreckungsebene verschieden sein könnte und welche insbesondere wenigstens im Wesentlichen parallel zu der ersten Haupterstreckungsebene und/oder zu einer Haupterstreckungsebene der Aufstellplatte ausgerichtet sein könnte. Zumindest eines der Induktionselemente, insbesondere das Versorgungsinduktionselement und/oder zumindest eines der Aufnahmeinduktionselemente, könnte beispielsweise zumindest einen dritten Abschnitt aufweisen, welcher den ersten Abschnitt und den zweiten Abschnitt insbesondere elektrisch miteinander verbinden könnte und welcher insbesondere eine Haupterstreckungsebene aufweisen könnte, die winklig relativ zu der ersten Haupterstreckungsebene und/oder zu der zweiten Haupterstreckungsebene und/oder zu der Haupterstreckungsebene der Aufstellplatte ausgerichtet sein könnte.

Das Versorgungsinduktionselement könnte beispielsweise als ein Transformator ausgebildet sein. Alternativ oder zusätzlich könnte das Versorgungsinduktionselement insbesondere als ein Induktionsheizelement ausgebildet sein und insbesondere zu einer Energieübertragung an zumindest eine als Aufstelleinheit ausgebildete Aufnahmeeinheit insbesondere zum Zweck einer Erhitzung zumindest eines Teils der Aufstelleinheit vorgesehen sein. Das Versorgungsinduktionselement könnte in wenigstens einem Betriebszustand insbesondere ein Wechselfeld, insbesondere ein elektromagnetisches Wechselfeld, mit einer Frequenz von mindestens 1 Hz, insbesondere von mindestens 2 Hz, vorteilhaft von mindestens 5 Hz und vorzugsweise von mindestens 10 Hz bereitstellen. Insbesondere könnte das Versorgungsinduktionselement in wenigstens einem Betriebszustand insbesondere ein Wechselfeld, insbesondere ein elektromagnetisches Wechselfeld, mit einer Frequenz von maximal 150 kHz, insbesondere von maximal 120 kHz, vorteilhaft von maximal 100 kHz und vorzugsweise von maximal 80 kHz bereitstellen. Ein insbesondere als Induktionsheizelement ausgebildetes Versorgungsinduktionselement könnte in wenigstens einem Betriebszustand insbesondere ein hochfrequentes Wechselfeld, insbesondere ein hochfrequentes elektromagnetisches Wechselfeld, mit einer Frequenz von mindestens 15 kHz und insbesondere von maximal 100 kHz bereitstellen.

Beispielsweise könnte die Versorgungseinheit genau ein Versorgungsinduktionselement aufweisen. Die Versorgungseinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Versorgungsinduktionselemente aufweisen, welche insbesondere in dem Betriebszustand jeweils induktiv Energie bereitstellen könnten, und zwar insbesondere an eine insbesondere einzige Aufnahmeeinheit oder an zumindest zwei Aufnahmeeinheiten. Insbesondere könnte ein insbesondere beliebiges der Versorgungsinduktionselemente in einem Nahbereich zu zumindest einem weiteren der Versorgungsinduktionselemente angeordnet sein. Zumindest ein Teil der Versorgungsinduktionselemente könnte beispielsweise in einer Reihe und/oder in Form einer Matrix angeordnet sein.

Insbesondere könnte zumindest ein Teil der Versorgungsinduktionselemente, insbesondere bei einer senkrechten Betrachtung auf eine Haupterstreckungsebene zumindest eines der Versorgungsinduktionselemente, wenigstens teilweise überlappend angeordnet sein.

Unter einer "Aufnahmeeinheit" soll insbesondere eine Einheit verstanden werden, welche in wenigstens einem Betriebszustand, insbesondere induktiv, Energie empfängt und welche insbesondere eine Hauptfunktion in Form einer Energieaufnahme aufweist. Die Aufnahmeeinheit könnte beispielsweise zumindest einen Verbraucher aufweisen, welcher insbesondere Teil der weiteren Einheit sein könnte und welcher in dem Betriebszustand insbesondere Energie verbrauchen könnte. Alternativ oder zusätzlich könnte die Aufnahmeeinheit zu einer Energieversorgung der weiteren Einheit vorgesehen sein und insbesondere selbst frei von einem Verbraucher sein. Die Aufnahmeeinheit könnte beispielsweise eine Handwerkzeugmaschine, wie beispielsweise ein Bohrer und/oder ein Elektroschrauber und/oder ein Bohrhammer und/oder eine Säge, und/oder ein Auto und/oder ein mobiles Gerät, wie beispielsweise ein Laptop und/oder ein Tablet und/oder ein Mobiltelefon, und/oder eine Fernsteuerung und/oder eine Fernbedienung und/oder ein selbstfahrendes Arbeitsgerät sein. Beispielsweise könnte die von der Aufnahmeeinheit aufgenommene Energie in dem Betriebszustand insbesondere direkt in zumindest eine weitere Energieform umgewandelt werden, wie beispielsweise in Wärme. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Aufnahmeinduktionselemente aufweisen, welche insbesondere in dem Betriebszustand jeweils induktiv Energie insbesondere von dem Versorgungsinduktionselement empfangen könnten.

Beispielsweise könnten die Aufnahmeinduktionselemente und/oder zumindest ein weiteres Aufnahmeinduktionselement der Aufnahmeeinheit an einer Leiterplatte angeordnet und insbesondere durch Leiterbahnen der Leiterplatte definiert sein. Insbesondere könnte die Aufnahmeeinheit die Leiterplatte aufweisen. Insbesondere unterscheiden sich die Aufnahmeinduktionselemente jeweils in zumindest einer Eigenschaft, wie beispielsweise Größe und/oder Durchmesser und/oder Windungszahl, wodurch insbesondere bei einer festen von dem Versorgungsinduktionselement bereitgestellten Spannung in jedem der Aufnahmeinduktionselemente eine andere Spannung induziert werden kann. Dadurch kann insbesondere eine besonders flexible Ausgestaltung und/oder bei nahezu jeder von dem Versorgungsinduktionselement bereitgestellten Spannung einer Versorgung der weiteren Einheit ermöglicht werden.

In wenigstens einem Betriebszustand, in welchem das Versorgungsinduktionselement insbesondere Energie an die Aufnahmeeinheit, insbesondere an die Aufnahmeinduktionselemente und/oder an weitere Aufnahmeinduktionselemente der Aufnahmeeinheit, bereitstellt und in welchem die Aufnahmeeinheit, insbesondere die Aufnahmeinduktionselemente und/oder weitere Aufnahmeinduktionselemente der Aufnahmeeinheit, Energie von dem Versorgungsinduktionselement empfängt, ist eine kürzeste Versbindung zwischen dem Versorgungsinduktionselement und zumindest einem der Aufnahmeinduktionselemente insbesondere minimal. Unter einem "Betriebszustand" soll hier und im Folgenden ein funktionsmäßig gekoppelter Zustand verstanden werden, in welchem eine kürzeste Verbindung zwischen dem Versorgungsinduktionselement und zumindest einem der Aufnahmeinduktionselemente minimal ist und in welchem das Versorgungsinduktionselement insbesondere induktiv Energie an das Aufnahmeinduktionselement überträgt und in welchem insbesondere das Versorgungsinduktionselement und das Aufnahmeinduktionselement funktionsmäßig miteinander gekoppelt sind. Vorteilhaft sind das Versorgungsinduktionselement und das Aufnahmeinduktionselement in dem Betriebszustand bei einer senkrechten Betrachtung auf eine Haupterstreckungsebene des Versorgungsinduktionselements wenigstens abschnittsweise und vorteilhaft wenigstens zu einem Großteil überlappend angeordnet.

Im Fall, dass eine von dem Versorgungsinduktionselement bereitgestellte Energie unterhalb eines Grenz-Schwellwerts ist und/oder wenigstens im Wesentlichen Null beträgt, ist die Aufnahmeeinheit, insbesondere Objekte der Aufnahmeeinheit, deaktiviert. Im Fall, dass eine von dem Versorgungsinduktionselement bereitgestellte Energie gerade den Grenz-Schwellwert annimmt und/oder größer ist als der Grenz-Schwellwert, wird mit der von den Aufnahmeinduktionselementen aufgenommenen Energie zunächst die Steuereinheit mit Energie versorgt, und zwar insbesondere bevor die weitere Einheit mit Energie versorgt wird. Ist die von dem Versorgungsinduktionselement bereitgestellte und von den Aufnahmeinduktionselementen aufgenommene Energie größer als eine Energie, welche zu der Versorgung der Steuereinheit mit Energie notwendig ist, versorgt die Steuereinheit mit der verbleibenden Energie die weitere Einheit.

Insbesondere ist in dem Betriebszustand eine von dem Versorgungsinduktionselement bereitgestellte und von den Aufnahmeinduktionselementen aufgenommene Energie ausreichend, um insbesondere die Steuereinheit mit Energie zu versorgen. In dem Betriebszustand ist insbesondere eine von dem Versorgungsinduktionselement bereitgestellte und von den Aufnahmeinduktionselementen aufgenommene Energie gleich oder größer als der Grenz-Schwellwert.

Unter einer "Haupterstreckungsebene" eines Objekts soll insbesondere eine Ebene verstanden werden, welche parallel zu einer größten Seitenfläche eines kleinsten gedachten geometrischen Quaders ist, welcher das Objekt gerade noch vollständig umschließt, und durch den Mittelpunkt des Quaders verläuft. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Unter einer "Steuereinheit" soll insbesondere eine elektronische Einheit verstanden werden, die insbesondere zu einer Steuerung und/oder Regelung zumindest der Aufnahmeinduktionselemente und/oder des Versorgungsinduktionselements und/oder der weiteren Einheit und/oder zumindest eines Spannungsreglers der Aufnahmeeinheit vorgesehen ist. Vorzugsweise umfasst die Steuereinheit eine Recheneinheit und insbesondere zusätzlich zur Recheneinheit eine Speichereinheit mit einem darin gespeicherten Steuer- und/oder Regelprogramm, das dazu vorgesehen ist, von der Recheneinheit ausgeführt zu werden. Beispielsweise könnte die Steuereinheit Teil der Versorgungseinheit sein und insbesondere in einer Steuer- und/oder Regeleinheit der Versorgungseinheit wenigstens teilweise integriert sein. Alternativ könnte die Steuereinheit Teil einer externen Einheit sein. Die externe Einheit könnte insbesondere Teil des Induktionsenergieübertragungssystems sein und beispielsweise ein Mobilgerät und/oder ein Rechner und/oder eine externe Steuerungseinheit sein. Das Mobilgerät könnte beispielsweise ein Handy und/oder ein Laptop und/oder ein Tablet und/oder ein Mobiltelefon sein. Vorzugsweise ist die Steuereinheit Teil der Aufnahmeeinheit und insbesondere wenigstens zu einem Großteil in der Aufnahmeeinheit integriert. Insbesondere ist die Steuereinheit dazu vorgesehen, zu der Energieübertragung dasjenige Versorgungsinduktionselement zu aktivieren, bei welchen insbesondere eine kürzeste Verbindung zu einem nahegelegenen der Aufnahmeinduktionselemente minimal ist.

Die Steuereinheit aktiviert in dem Betriebszustand insbesondere im Fall einer von dem Versorgungsinduktionselement bereitgestellten Energie, welche einen ersten Schwellwert unterschreitet, eine größere Anzahl an Aufnahmeinduktionselementen als bei einer von dem Versorgungsinduktionselement bereitgestellten Energie, welche den ersten Schwellwert überschreitet. Insbesondere aktiviert die Steuereinheit in dem Betriebszustand im Fall einer von dem Versorgungsinduktionselement bereitgestellten Energie, welche einen von dem ersten Schwellwert verschiedenen zweiten Schwellwert unterschreitet, eine größere Anzahl an Aufnahmeinduktionselementen als bei einer von dem Versorgungsinduktionselement bereitgestellten Energie, welche den ersten Schwellwert überschreitet und/oder welche den zweiten Schwellwert unterschreitet. Insbesondere ist der erste Schwellwert kleiner als der zweite Schwellwert.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die Aufnahmeeinheit zumindest zwei Spannungsregler, insbesondere zumindest zwei Linearregler, aufweist, welche jeweils mit einem der Aufnahmeinduktionselemente elektrisch leitend verbunden sind. Insbesondere ist eine Anzahl an Aufnahmeinduktionselementen und eine Anzahl an Spannungsreglern identisch. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere Spannungsregler aufweisen, welche insbesondere jeweils mit einem der Aufnahmeinduktionselemente elektrisch leitend verbunden sein könnten. Zumindest einer der, insbesondere zumindest ein Teil der, vorteilhaft zumindest ein Großteil der und besonders vorteilhaft jeder der Spannungsregler könnte beispielsweise ein Schaltregler sein. Vorzugsweise ist zumindest einer der, insbesondere zumindest ein Teil der, vorteilhaft zumindest ein Großteil der und besonders vorteilhaft jeder der Spannungsregler ein Linearregler. Die Spannungsregler könnten insbesondere elektrisch parallel zueinander geschaltet sein. Dadurch könnte sich insbesondere eine von den Spannungsreglern bereitgestellte Spannung addieren könnten, wodurch insbesondere selbst bei einer geringen von dem Versorgungsinduktionselement bereitgestellten Spannung ausreichend Energie zu einer Versorgung der weiteren Einheit und/oder der Steuereinheit zur Verfügung stehen könnte. Alternativ zu einer Ausgestaltung mit Spannungsregler könnte beispielsweise eine Kombination aus zumindest einem elektrischen Widerstand und zumindest einem Gleichspannungswandler vorgesehen sein. Dadurch kann insbesondere eine geringe Fehleranfälligkeit und/oder geringe Kosten erreicht werden, und zwar insbesondere in einem Vergleich zu einer Verwendung zumindest eines Transistors anstatt dem Spannungsregler. Trotz einer hohen Variabilität in einer von dem Versorgungsinduktionselement bereitgestellten Spannung kann insbesondere auf eine Verwendung von Schalteinheiten verzichtet und/oder eine wenigstens im Wesentlichen konstante Spannung zur Versorgung der weiteren Einheit bereitgestellt werden.

Insbesondere zu dem Heranziehen der unterschiedlichen Anzahl an Aufnahmeinduktionselementen könnte die Steuereinheit beispielsweise eine elektrische Verbindung zwischen zumindest einem der Aufnahmeinduktionselemente und dem entsprechenden Spannungsregler herstellen und/oder trennen, und zwar insbesondere mittels zumindest einer Schalteinheit der Aufnahmeeinheit. Die Schalteinheit könnte insbesondere zumindest zwei Schaltelemente aufweisen, von welchen jeweils eines der Schaltelemente zwischen einem der Aufnahmeinduktionselemente und einem der Spannungsregler angeordnet sein könnte. Alternativ oder zusätzlich könnte die Aufnahmeeinheit zumindest einen veränderbaren Widerstand aufweisen, welcher insbesondere elektrisch in Reihe mit zumindest einem der Aufnahmeinduktionselemente und/oder mit zumindest einem der Spannungsregler geschaltet sein könnte und welchen die Steuereinheit insbesondere zu dem Heranziehen der unterschiedlichen Anzahl an Aufnahmeinduktionselemente verändern könnte. Vorzugsweise verändert die Steuereinheit in wenigstens einem Betriebszustand insbesondere zu dem Heranziehen der unterschiedlichen Anzahl an Aufnahmeinduktionselementen einen elektrischen Widerstand von zumindest einem der Spannungsregler. Zu einem Heranziehen zumindest eines der Aufnahmeinduktionselemente reduziert die Steuereinheit in dem Betriebszustand insbesondere einen Wert des elektrischen Widerstands. Insbesondere erhöht die Steuereinheit einen Wert des elektrischen Widerstands zu einem Trennen des Aufnahmeinduktionselements von einer Versorgung der weiteren Einheit. Dadurch kann insbesondere eine wenigstens im Wesentlichen konstante Spannung zu der Versorgung der weiteren Einheit ermöglicht werden, und zwar insbesondere unabhängig von einer von dem Versorgungsinduktionselement bereitgestellten Spannung.

Beispielsweise könnte die Aufnahmeeinheit ausschließlich die Aufnahmeinduktionselemente aufweisen und insbesondere frei von weiteren Aufnahmeinduktionselementen sein. Die Steuereinheit könnte beispielsweise mittels der Aufnahmeinduktionselemente in dem Betriebszustand die weitere Einheit versorgen und in wenigstens einem weiteren Betriebszustand eine Position der Aufnahmeeinheit relativ zu dem Versorgungsinduktionselement ermitteln und insbesondere optimieren. Vorzugsweise weist die Aufnahmeeinheit zumindest ein weiteres Aufnahmeinduktionselement auf, welches insbesondere in wenigstens einem insbesondere weiteren Betriebszustand induktiv Energie von dem Versorgungsinduktionselement empfangen könnte, wobei die Steuereinheit in wenigstens einem insbesondere weiteren Betriebszustand mittels des weiteren Aufnahmeinduktionselements, insbesondere mittels einer in dem weiteren Aufnahmeinduktionselement induzierten Spannung, eine Position der Aufnahmeeinheit relativ zu dem Versorgungsinduktionselement ermittelt und insbesondere optimiert. Die Aufnahmeeinheit könnte beispielsweise zumindest zwei, insbesondere zumindest drei, vorteilhaft zumindest vier, besonders vorteilhaft zumindest fünf, vorzugsweise zumindest acht und besonders bevorzugt mehrere weitere Aufnahmeinduktionselemente aufweisen, welche insbesondere in wenigstens einem Betriebszustand jeweils induktiv Energie insbesondere von dem Versorgungsinduktionselement empfangen könnten und mittels welchen die Steuereinheit insbesondere die Position der Aufnahmeeinheit relativ zu dem Versorgungsinduktionselement ermitteln und insbesondere optimieren könnte. Insbesondere ermittelt und/oder optimiert die Steuereinheit in dem Betriebszustand eine Position der Aufnahmeeinheit relativ zu dem Versorgungsinduktionselement anhand einer in dem weiteren Aufnahmeinduktionselement induzierten Spannung, welche insbesondere maximal ist im Fall, dass das weitere Aufnahmeinduktionselement und das Versorgungsinduktionselement bei einer senkrechten Betrachtung auf eine Haupterstreckungsebene des Versorgungsinduktionselements und/oder des weiteren Aufnahmeinduktionselements überlappend angeordnet sind. Die Steuereinheit ermittelt und/oder optimiert in dem Betriebszustand insbesondere eine Position der Aufnahmeeinheit relativ zu dem Versorgungsinduktionselement in einer Ebene, welche parallel zu einer Haupterstreckungsebene des Versorgungsinduktionselements und/oder des weiteren Aufnahmeinduktionselements und/oder der Aufstellplatte ausgerichtet ist. Dadurch kann insbesondere auf einfache und/oder unkomplizierte Art und Weise eine optimale Position der Aufnahmeeinheit relativ zu dem Versorgungsinduktionselement ermittelt werden, wodurch insbesondere eine effiziente und/oder optimierte Energieübertragung gewährleistet werden kann.

Ferner wird vorgeschlagen, dass die Aufnahmeinduktionselemente und das weitere Aufnahmeinduktionselement voneinander verschieden ausgebildet sind. Dadurch kann insbesondere ein störungsfreier und/oder störungsarmer Betrieb der Aufnahmeinduktionselemente und/oder des weiteren Aufnahmeinduktionselements ermöglicht werden, wodurch insbesondere eine hohe Funktionstüchtigkeit und/oder ein hoher Bedienkomfort erreicht werden kann.

Insbesondere könnten die Aufnahmeinduktionselemente und das weitere Aufnahmeinduktionselement wenigstens zu einem Großteil auf gleicher Höhe und/oder in der gleichen Ebene angeordnet sein, welche insbesondere durch eine Haupterstreckungsebene zumindest eines der Aufnahmeinduktionselemente und/oder des weiteren Aufnahmeinduktionselements definiert sein könnte. Die Aufnahmeinduktionselemente und das weitere Aufnahmeinduktionselement könnten in dem Betriebszustand insbesondere wenigstens im Wesentlichen und vorteilhaft vollständig den gleichen Abstand zu dem Versorgungsinduktionselement und/oder zu einer Aufstellplatte und/oder zu einem Gehäuseboden einer Gehäuseeinheit der Aufnahmeeinheit aufweisen. Vorzugsweise weisen die Aufnahmeinduktionselemente und das weitere Aufnahmeinduktionselement in dem Betriebszustand unterschiedliche Abstände zu dem Versorgungsinduktionselement auf. Insbesondere sind die Aufnahmeinduktionselemente und das weitere Aufnahmeinduktionselement in dem Betriebszustand insbesondere in verschiedenen Ebenen und/oder Höhenlagen, insbesondere relativ zu dem Versorgungsinduktionselement und/oder zu einer Aufstellplatte und/oder zu einem Gehäuseboden einer Gehäuseeinheit der Aufnahmeeinheit, angeordnet. Insbesondere weist eine Ebene, in welcher die Aufnahmeinduktionselemente angeordnet sind und welche insbesondere durch eine Haupterstreckungsebene zumindest eines der Aufnahmeinduktionselemente definiert ist, einen größeren oder kleineren Abstand zu einer Ebene auf, in welcher das Versorgungsinduktionselement angeordnet ist und welche insbesondere durch eine Haupterstreckungsebene des Versorgungsinduktionselements definiert ist, als eine Ebene, in welcher das weitere Aufnahmeinduktionselement angeordnet sind und welche insbesondere durch eine Haupterstreckungsebene des weiteren Aufnahmeinduktionselements definiert ist. Insbesondere im Fall, dass die Aufnahmeinduktionselemente und/oder das weitere Aufnahmeinduktionselement an einer Leiterplatte angeordnet und insbesondere durch Leiterbahnen der Leiterplatte definiert sind, könnten die Aufnahmeinduktionselemente an einer ersten Seite der Leiterplatte und das weitere Aufnahmeinduktionselement an einer zweiten Seite der Leiterplatte, welche insbesondere von der ersten Seite verschieden ist, angeordnet sein. Dadurch kann insbesondere eine einfache Ansteuerung durch die Steuereinheit erzielt und/oder eine gegenseitige Beeinflussung der Aufnahmeinduktionselemente und des weiteren Aufnahmeinduktionselements vermieden werden. Insbesondere kann auf ein insbesondere häufiges Schalten zwischen den Aufnahmeinduktionselementen und dem weiteren Aufnahmeinduktionselement verzichtet werden.

Beispielsweise könnten die Aufnahmeinduktionselemente und das weitere Aufnahmeinduktionselement bei einer senkrechten Betrachtung auf eine Haupterstreckungsebene zumindest eines der Aufnahmeinduktionselemente insbesondere benachbart zueinander angeordnet sein. Vorzugsweise sind die Aufnahmeinduktionselemente und das weitere Aufnahmeinduktionselement bei einer senkrechten Betrachtung auf eine Haupterstreckungsebene zumindest eines der Aufnahmeinduktionselemente überlappend zueinander angeordnet.

Weiterhin wird vorgeschlagen, dass die Aufnahmeinduktionselemente Teil einer gemeinsamen Sekundärspule sind. Insbesondere sind die Aufnahmeinduktionselemente Spulenabschnitte einer gemeinsamen Sekundärspule. Die Aufnahmeinduktionselemente sind insbesondere elektrisch in Reihe geschaltet. Ein Übergang zwischen zwei elektrisch zueinander benachbart angeordneten Aufnahmeinduktionselementen ist insbesondere durch einen Abgriff zumindest eines der Spannungsregler definiert und/oder vorgegeben. Dadurch kann insbesondere auf eine Vielzahl verschiedener Sekundärspulen verzichtet werden, wodurch insbesondere eine geringe Lagerhaltung und/oder eine geringe Bauteilevielfalt erzielt werden kann.

Ferner wird vorgeschlagen, dass die Aufnahmeinduktionselemente Teil zumindest zweier verschiedener Sekundärspulen sind. Zumindest ein Großteil der und vorteilhaft jedes der Aufnahmeinduktionselemente ist insbesondere Teil einer anderen Sekundärspule. Insbesondere ist eine Anzahl an Sekundärspulen und eine Anzahl an Aufnahmeinduktionselementen identisch. Insbesondere unterscheiden sich die Aufnahmeinduktionselemente und vorteilhaft die Sekundärspulen jeweils in zumindest einer Eigenschaft, wie beispielsweise Größe und/oder Durchmesser und/oder Windungszahl. Dadurch kann insbesondere eine hohe Flexibilität erreicht werden.

Die weitere Einheit könnte beispielsweise Teil einer externen Einheit sein. Vorzugsweise weist die Aufnahmeeinheit die weitere Einheit auf, welche eine von der Steuereinheit verschiedene Elektronikeinheit ist. Die weitere Einheit könnte beispielsweise eine Anzeigeeinheit und/oder eine Ausgabeeinheit und/oder eine Bedienerschnittstelle und/oder eine Beleuchtungseinheit sein. Dadurch kann insbesondere ein hoher Bedienkomfort erzielt werden.

Die Versorgungseinheit könnte beispielsweise als ein Energieladegerät, insbesondere als ein Induktionsenergieladegerät, ausgebildet und insbesondere dazu vorgesehen sein, mittels des Versorgungsinduktionselements Energie an zumindest eine Aufnahmeeinheit zu übertragen, welche insbesondere als ein mobiles Gerät, wie beispielsweise ein Laptop und/oder ein Tablet und/oder ein Mobiltelefon, und/oder eine Handwerkzeugmaschine und/oder ein selbstfahrendes Arbeitsgerät und/oder als eine Fernsteuerung und/oder als eine Fernbedienung ausgebildet sein könnte. Alternativ oder zusätzlich könnte die Versorgungseinheit beispielsweise als ein Gargerät, insbesondere als ein Induktionsgargerät, ausgebildet sein, wie insbesondere als ein Backofen, insbesondere als ein Induktionsbackofen, und/oder als ein Grill, insbesondere als ein Induktionsgrill. Vorzugsweise weist das Induktionsenergieübertragungssystem die Versorgungseinheit auf, welche als ein Kochfeld und vorteilhaft als ein Induktionskochfeld ausgebildet ist. Insbesondere könnte die Versorgungseinheit mittels der von dem Versorgungsinduktionselement bereitgestellten Energie zumindest einen Teil der Aufnahmeeinheit, insbesondere zumindest einen Aufnahmeraum der Aufnahmeeinheit, beheizen. Dadurch kann die Aufnahmeeinheit insbesondere mit der für die Aufnahmeeinheit vorgesehenen Energie versorgt werden, wodurch insbesondere optimale Garergebnisse und/oder eine zuverlässige Funktionstüchtigkeit von in der Aufnahmeeinheit integrierten elektrischen und/oder elektronischen Einheiten erreicht werden kann.

Ferner wird vorgeschlagen, dass die Aufnahmeeinheit als eine Aufstelleinheit ausgebildet ist, welche insbesondere zu einem Aufstellen auf einer Aufstellplatte vorgesehen ist und welche zumindest einen Aufnahmeraum zu einer Aufnahme von Lebensmitteln, insbesondere von Gargut, aufweist, Insbesondere weist das Induktionsenergieübertragungssystem zumindest eine Aufstellplatte auf, welche insbesondere zu einem Aufstellen der Aufstelleinheit vorgesehen ist. Insbesondere ist die Versorgungseinheit in dem Betriebszustand wenigstens zu einem Großteil unterhalb der Aufstellplatte angeordnet. Unter einer "Aufstelleinheit" soll insbesondere eine Einheit verstanden werden, welche zu einer Kopplung mit der Versorgungseinheit, insbesondere mit dem Versorgungsinduktionselement, vorgesehen ist und welche insbesondere im Zuge der Kopplung mit der Versorgungseinheit in wenigstens einem Betriebszustand Energie von der Versorgungseinheit empfängt und/oder aufnimmt. Die Aufstelleinheit könnte beispielsweise zumindest ein Gargeschirr aufweisen. Alternativ oder zusätzlich könnte die Aufstelleinheit zumindest eine Unterlegeinheit aufweisen, welche insbesondere zu einem Aufstellen zumindest eines Gargeschirrs, insbesondere des Gargeschirrs, vorgesehen sein könnte. Die Unterlegeinheit könnte insbesondere zu einer Anordnung zwischen der Aufstellplatte und dem Gargeschirr vorgesehen sein. Alternativ oder zusätzlich könnte die Aufstelleinheit zumindest eine Gehäuseeinheit aufweisen, welche insbesondere als eine Außengehäuseeinheit ausgebildet sein könnte und insbesondere ein Außengehäuse definieren könnte. Insbesondere könnte zumindest ein Objekt der Aufstelleinheit, insbesondere zumindest die Aufnahmeinduktionselemente und/oder die weitere Einheit und/oder das weitere Aufnahmeinduktionselement und/oder die Steuereinheit, wenigstens teilweise und vorteilhaft wenigstens zu einem Großteil in der Gehäuseeinheit integriert sein. Insbesondere könnte zumindest eines der Aufnahmeinduktionselemente in dem Betriebszustand eine den Aufnahmeraum wenigstens abschnittsweise begrenzenden Wandung mittels zumindest eines Teils der von dem Versorgungsinduktionselement aufgenommenen Energie beheizen. Alternativ oder zusätzlich könnte das Versorgungsinduktionselement insbesondere mittels der von dem Versorgungsinduktionselement bereitgestellten Energie in dem Betriebszustand eine den Aufnahmeraum wenigstens abschnittsweise begrenzenden Wandung direkt beheizen. Unter einem "Aufnahmeraum" soll insbesondere räumlicher Bereich verstanden werden, welcher in dem Betriebszustand, in welchem die Versorgungseinheit insbesondere Energie an die Aufnahmeeinheit überträgt, wenigstens zu einem Großteil von der Aufnahmeeinheit begrenzt ist und in welchem in dem Betriebszustand insbesondere Lebensmittel angeordnet sein können. Die Lebensmittel könnten insbesondere in fluider, insbesondere flüssiger und/oder wenigstens zu einem Großteil flüssiger, und/oder fester Form in dem Aufnahmeraum angeordnet sein. Dadurch können Lebensmittel insbesondere besonders effizient und/oder gezielt gegart werden, da insbesondere eine zu einer Garung erforderliche Energie präzise übertragen werden kann.

Ein besonders hoher Bedienkomfort, und zwar insbesondere in Bezug auf eine hohe Funktionstüchtigkeit und/oder eine optimierte Energieversorgung der weiteren Einheit, kann insbesondere erreicht werden durch ein Verfahren zum Betrieb eines Induktionsenergieübertragungssystems, welche zumindest eine Aufnahmeeinheit aufweist, welche zumindest zwei Aufnahmeinduktionselemente aufweist, die zu einem Empfang von Energie von zumindest einem Versorgungsinduktionselement zumindest einer Versorgungseinheit vorgesehen sind und welche zu einer Energieversorgung zumindest einer weiteren Einheit vorgesehen sind, wobei in Abhängigkeit einer von dem Versorgungsinduktionselement bereitgestellten Energie eine unterschiedliche Anzahl an Aufnahmeinduktionselementen zu der Energieversorgung der weiteren Einheit herangezogen wird.

Das Induktionsenergieübertragungssystem soll hierbei nicht auf die oben beschriebene Anwendung und Ausführungsform beschränkt sein. Insbesondere kann das Induktionsenergieübertragungssystem zu einer Erfüllung einer hierin beschriebenen Funktionsweise eine von einer hierin genannten Anzahl von einzelnen Elementen, Bauteilen und Einheiten abweichende Anzahl aufweisen.

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Induktionsenergieübertragungssystem mit einer Versorgungseinheit und mit einer Aufnahmeeinheit in einer schematischen teilweisen Schnittdarstellung,
- Fig. 2: die Versorgungseinheit in einer schematischen Draufsicht,
- Fig. 3: drei Diagramme, in welchen eine Leistung, ein elektromagnetisches Feld und eine Spannung jeweils über einer Frequenz aufgetragen sind, in einer schematischen Darstellung,
- Fig. 4: Aufnahmeinduktionselemente der Aufnahmeeinheit in einer schematischen Draufsicht,
- Fig. 5: ein Schaltdiagramm des Induktionsenergieübertragungssystems in einer schematischen Darstellung,
- Fig. 6: Aufnahmeinduktionselemente einer Aufnahmeeinheit eines alternativen Induktionsenergieübertragungssystems in einer schematischen Draufsicht,
- Fig. 7: alternative Aufnahmeinduktionselemente einer Aufnahmeeinheit des Induktionsenergieübertragungssystems aus Fig. 6 in einer schematischen Draufsicht,
- Fig. 8: ein Schaltdiagramm des Induktionsenergieübertragungssystems aus Fig. 6 und 7 in einer schematischen Darstellung und
- Fig. 9: ein alternatives Induktionsenergieübertragungssystem mit einer Versorgungseinheit und mit einer Aufnahmeeinheit in einer schematischen teilweisen Schnittdarstellung.

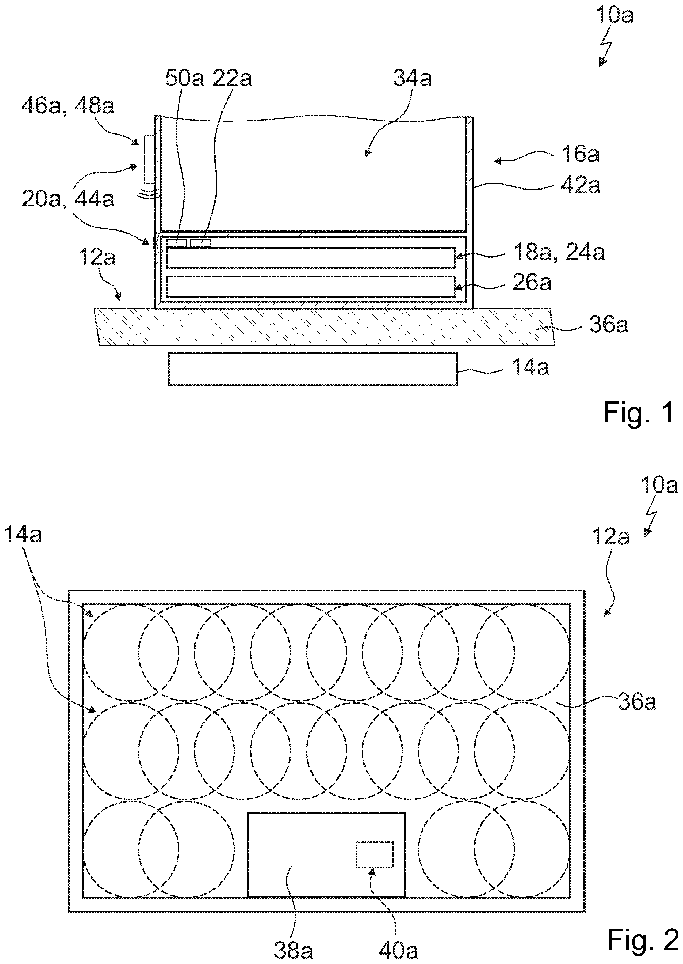

Fig. 1 zeigt ein Induktionsenergieübertragungssystem 10a, welches als ein Induktionsgarsystem ausgebildet ist. Im vorliegenden Ausführungsbeispiel ist das Induktionsenergieübertragungssystem 10a als ein Induktionskochfeldsystem ausgebildet. Das Induktionsenergieübertragungssystem 10a weist eine Versorgungseinheit 12a auf, welche als eine Induktionsversorgungseinheit ausgebildet ist. Die Versorgungseinheit 12a ist als ein Kochfeld, und zwar insbesondere als ein Induktionskochfeld, ausgebildet. Die Versorgungseinheit 12a ist Teil des Induktionsenergieübertragungssystems 10a.

Die Versorgungseinheit 12a weist eine Aufstellplatte 36a auf. In einem montierten Zustand bildet die Aufstellplatte 36a eine Sichtfläche aus, welche in einem montierten Zustand insbesondere einem Bediener zugewandt angeordnet ist. Die Aufstellplatte 36a ist zu einem Aufstellen einer Aufnahmeeinheit 16a, insbesondere eines Gargeschirrs und/oder einer Unterlegeinheit und/oder einer Gehäuseeinheit der Aufnahmeeinheit 16a, zu einer Beheizung vorgesehen. Im vorliegenden Ausführungsbeispiel ist die Aufstellplatte 36a als eine Kochfeldplatte ausgebildet. Alternativ könnte die Aufstellplatte 36a als eine Arbeitsplatte 36a, insbesondere als eine Küchenarbeitsplatte, ausgebildet sein.

Die Versorgungseinheit 12a weist eine Versorgungs-Bedienerschnittstelle 38a zu einer Eingabe und/oder Auswahl von Betriebsparametern auf, beispielsweise einer Heizleistung und/oder einer Heizleistungsdichte und/oder einer Heizzone (vgl. Fig. 2). Die Versorgungs-Bedienerschnittstelle 38a ist zu einer Ausgabe eines Werts eines Betriebsparameters an einen Bediener vorgesehen.

Die Versorgungseinheit 12a weist eine Versorgungs-Steuereinheit 40a auf. Die Versorgungs-Steuereinheit 40a ist dazu vorgesehen, in Abhängigkeit von mittels der Versorgungs-Bedienerschnittstelle 38a eingegebener Betriebsparameter Aktionen auszuführen und/oder Einstellungen zu verändern. Die Versorgungs-Steuereinheit 40a regelt in einem Betriebszustand eine Energiezufuhr zu zumindest einem Versorgungsinduktionselement 14a der Versorgungseinheit 12a.

Die Versorgungseinheit 12a weist mehrere Versorgungsinduktionselemente 14a auf (vgl. Fig. 2). Von mehrfach vorhandenen Objekten ist in den Figuren jeweils lediglich eines mit einem Bezugszeichen versehen. Die Versorgungsinduktionselemente 14a sind im vorliegenden Ausführungsbeispiel in Form einer Matrix angeordnet. Alternativ könnte die Versorgungseinheit 12a eine andere Anzahl an Versorgungsinduktionselementen 14a aufweisen. Die Versorgungsinduktionselemente 14a könnten beispielsweise auf eine von einer Anordnung in Form einer Matrix verschiedene Weise angeordnet sein. Im Folgenden wird lediglich eines der Versorgungsinduktionselemente 14a beschrieben.

Das Versorgungsinduktionselement 14a ist dazu vorgesehen, auf der Aufstellplatte 36a oberhalb des Versorgungsinduktionselements 14a aufgestellte Aufnahmeeinheiten 16a zu erhitzen. Das Versorgungsinduktionselement 14a ist als Induktionsheizelement ausgebildet. Das Versorgungsinduktionselement 14a ist in einer Einbaulage unterhalb der Aufstellplatte 36a angeordnet. Im vorliegenden Ausführungsbeispiel sind benachbart zueinander angeordnete Versorgungsinduktionselemente 14a bei einer senkrechten Betrachtung auf eine Haupterstreckungsebene eines der insbesondere benachbart zueinander angeordneten Versorgungsinduktionselemente 14a teilweise überlappend angeordnet.

In dem Betriebszustand stellt das Versorgungsinduktionselement 14a Energie induktiv bereit, und zwar insbesondere an die Aufnahmeeinheit 16a. Das Versorgungsinduktionselement 14a stellt in dem Betriebszustand induktiv Energie zu einer Beheizung zumindest eines Teils der Aufnahmeeinheit 16a bereit.

Das Induktionsenergieübertragungssystem 10a weist die Aufnahmeeinheit 16a auf. Die Aufnahmeeinheit 16a empfängt in dem Betriebszustand einen Teil der von dem Versorgungsinduktionselement 14a bereitgestellten Energie. Im vorliegenden Ausführungsbeispiel ist die Aufnahmeeinheit 16a als eine Aufstelleinheit ausgebildet. Die als Aufstelleinheit ausgebildete Aufnahmeeinheit 16a weist einen Aufnahmeraum 34a zu einer Aufnahme von Lebensmitteln auf.

Im vorliegenden Ausführungsbeispiel weist die Aufnahmeeinheit 16a eine Gehäuseeinheit 42a auf. Die Gehäuseeinheit 42a ist als eine Außengehäuseeinheit ausgebildet und bildet in dem Betriebszustand insbesondere ein Außengehäuse der Aufnahmeeinheit 16a aus.

Die Aufnahmeeinheit 16a weist im vorliegenden Ausführungsbeispiel drei Aufnahmeinduktionselemente 18a auf. Alternativ könnte die Aufnahmeeinheit 16a eine größere Anzahl an Aufnahmeinduktionselementen 18a aufweisen, wie beispielsweise zumindest vier, insbesondere zumindest fünf, vorteilhaft zumindest sechs und vorzugsweise mehrere Aufnahmeinduktionselemente 18a. In diesen und den folgenden Ausführungsbeispielen sind beispielhaft jeweils drei Aufnahmeinduktionselemente 18a beschrieben, jedoch kann eine Anzahl beliebig gewählt werden und die Beschreibung insbesondere auf eine andere Anzahl an Aufnahmeinduktionselementen 18a übertragen werden.

Die Aufnahmeinduktionselemente 18a sind jeweils zu einer Aufnahme des Teils der von dem Versorgungsinduktionselement 14a bereitgestellten Energie vorgesehen. Die Aufnahmeinduktionselemente 18a sind jeweils zu einem Großteil innerhalb der Gehäuseeinheit 42a integriert. In dem Betriebszustand sind die Aufnahmeinduktionselemente 18a zu einem Empfang von Energie von dem Versorgungsinduktionselement 14a der Versorgungseinheit 12a vorgesehen.

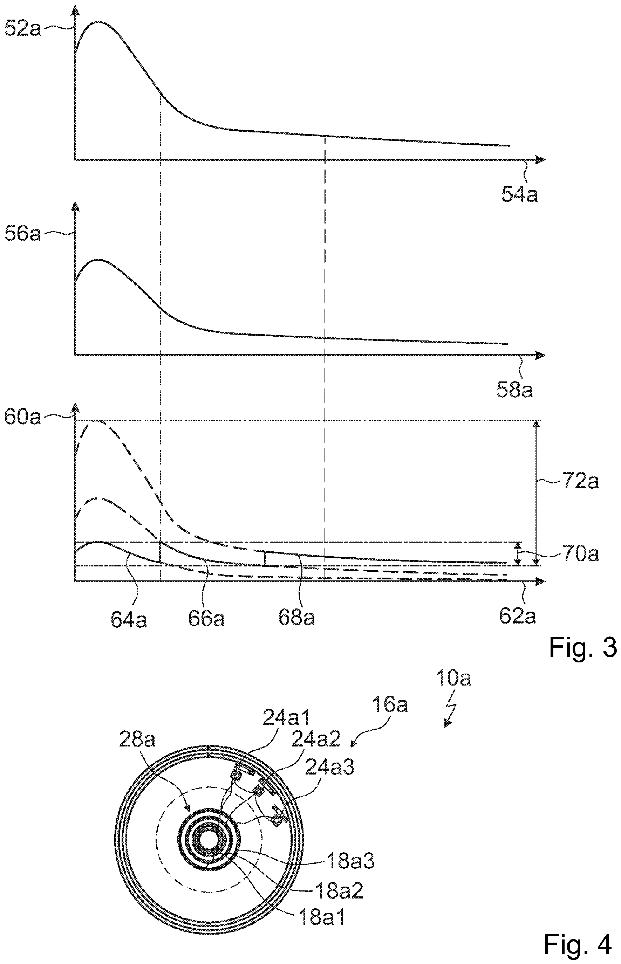

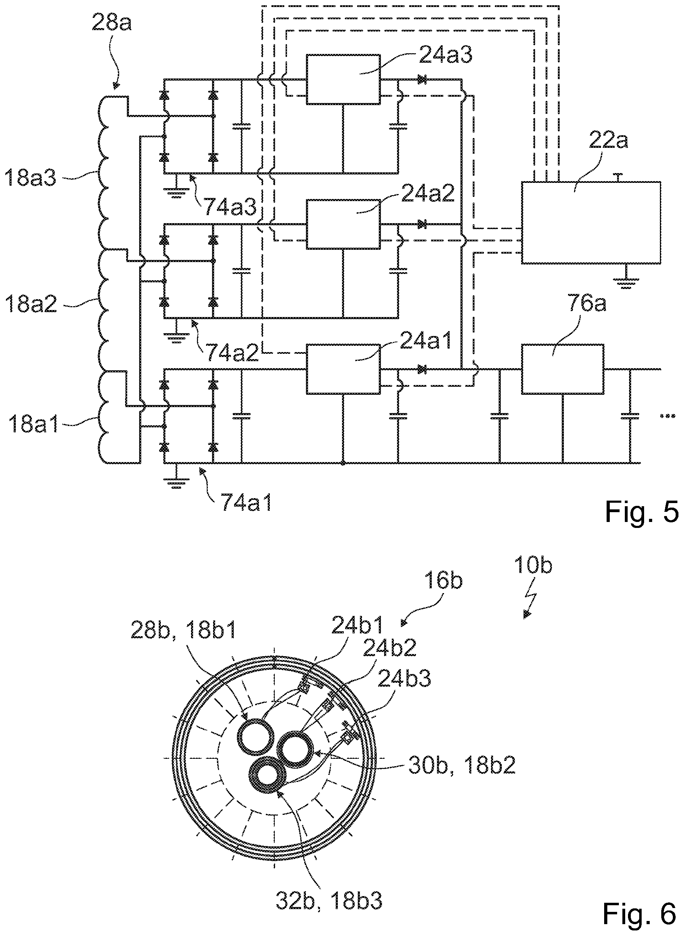

Die Aufnahmeinduktionselemente 18a unterscheiden sich jeweils in einer Eigenschaft (vgl. Fig. 4 und 5). Im vorliegenden Ausführungsbeispiel unterscheiden sich die Aufnahmeinduktionselemente 18a hinsichtlich eines Durchmessers. Die Aufnahmeinduktionselemente 18a unterscheiden sich im vorliegenden Ausführungsbeispiel hinsichtlich einer Anzahl an Windungen. Die unterschiedliche Anzahl an Windungen ist in Fig. 5 schematisch anhand einer unterschiedlichen Anzahl an halbbogenförmigen Abschnitten dargestellt.

Im vorliegenden Ausführungsbeispiel sind die Aufnahmeinduktionselemente 18a Teil einer einzigen gemeinsamen Sekundärspule 28a. Ein erstes Aufnahmeinduktionselement 18a1 der Aufnahmeinduktionselemente 18a ist in einem Spulenzentrum der Sekundärspule 28a angeordnet. Das erste Aufnahmeinduktionselement 18a1 bildet einen ersten Spulenabschnitt der Sekundärspule 28a aus.

Ein zweites Aufnahmeinduktionselement 18a2 der Aufnahmeinduktionselemente 18a weist das erste Aufnahmeinduktionselement 18a1 und zusätzlich hierzu einen zweiten Spulenabschnitt der Sekundärspule 28a auf, welcher insbesondere elektrisch in Reihe mit dem ersten Spulenabschnitt geschaltet ist und welcher insbesondere konzentrisch um den ersten Spulenabschnitt herum angeordnet ist.

Ein drittes Aufnahmeinduktionselement 18a3 der Aufnahmeinduktionselemente 18a weist das erste Aufnahmeinduktionselement 18a1 und das zweite Aufnahmeinduktionselement 18a2 und zusätzlich hierzu einen dritten Spulenabschnitt der Sekundärspule 28a auf, welcher insbesondere elektrisch in Reihe mit dem ersten Spulenabschnitt und dem zweiten Spulenabschnitt geschaltet ist und welcher insbesondere konzentrisch um den ersten Spulenabschnitt und den zweiten Spulenabschnitt herum angeordnet ist.

Die Aufnahmeinduktionselemente 18a versorgen in dem Betriebszustand mit einem Teil der von dem Versorgungsinduktionselement 18a aufgenommenen Energie eine weitere Einheit 20a. In dem Betriebszustand sind die Aufnahmeinduktionselemente 18a zu einer Energieversorgung der weiteren Einheit 20a vorgesehen. Die weitere Einheit 20a ist im vorliegenden Ausführungsbeispiel Teil der Aufnahmeeinheit 16a.

Die Aufnahmeeinheit 16a weist die weitere Einheit 20a auf. Die weitere Einheit 20a ist teilweise innerhalb der Gehäuseeinheit 42a integriert. Die weitere Einheit 20a ist teilweise an der Gehäuseeinheit 42a angeordnet. Im vorliegenden Ausführungsbeispiel ist die weitere Einheit 20a eine von einer Steuereinheit 22a des Induktionsenergieübertragungssystem 10a verschiedene Elektronikeinheit.

Die weitere Einheit 20a weist im vorliegenden Ausführungsbeispiel eine Bedienerschnittstelle 44a auf. Die weitere Einheit 20a und insbesondere die Bedienerschnittstelle 44a weist eine Eingabeeinheit 46a auf, welche insbesondere zu einer Eingabe von Betriebsparametern vorgesehen ist. Die weitere Einheit 20a und insbesondere die Bedienerschnittstelle 44a weist eine Ausgabeinheit 48a auf, welche insbesondere zu einer Ausgabe von Betriebsparametern, insbesondere an einen Bediener, vorgesehen ist. Die weitere Einheit 20a und insbesondere die Bedienerschnittstelle 44a weist eine Bedienelektronik 50a auf, welche insbesondere zu einer Verarbeitung von Betriebsparametern vorgesehen ist. Die Eingabeeinheit 46a und die Ausgabeeinheit 48a sind teilweise einstückig ausgebildet.

Das Induktionsenergieübertragungssystem 10a weist eine Steuereinheit 22a auf. Die Steuereinheit 22a ist zu einem Großteil innerhalb der Gehäuseeinheit 42a integriert. In dem Betriebszustand steuert und/oder regelt die Steuereinheit 22a die weitere Einheit 20a. Zu der Energieversorgung der weiteren Einheit 20a zieht die Steuereinheit 22a in dem Betriebszustand in Abhängigkeit einer von dem Versorgungsinduktionselement 14a bereitgestellten Energie eine unterschiedliche Anzahl an Aufnahmeinduktionselementen 18a heran (vgl. Fig. 3).

Fig. 3 zeigt drei übereinander angeordnete Diagramme, in welchen eine Leistung, ein elektromagnetisches Feld und eine Spannung jeweils über einer Frequenz aufgetragen sind. In einem oberen Diagramm ist auf einer Ordinatenachse 52a eine von dem Versorgungsinduktionselement 14a bereitgestellte Energie in Form einer Leistungskurve aufgetragen. Auf einer Abszissenachse 54a ist eine Frequenz aufgetragen.

In einem mittleren Diagramm ist auf einer Ordinatenachse 56a ein von dem Versorgungsinduktionselement 14a bereitgestelltes elektromagnetisches Feld aufgetragen. Auf einer Abszissenachse 58a ist eine Frequenz aufgetragen.

In einem unteren Diagramm ist auf einer Ordinatenachse 60a eine in einem jeweiligen der Aufnahmeinduktionselemente 18a induzierte Spannung aufgetragen. Auf einer Abszissenachse 62a ist eine Frequenz aufgetragen. Eine untere Spannungskurve 64a beschreibt eine in dem ersten Aufnahmeinduktionselement 18a induzierte Spannung. Eine mittlere Spannungskurve 66a beschreibt eine in dem zweiten Aufnahmeinduktionselement 18a induzierte Spannung. Eine obere Spannungskurve 68a beschreibt eine in dem dritten Aufnahmeinduktionselement 18a induzierte Spannung.

Im Fall einer geringeren von dem Versorgungsinduktionselement 14a bereitgestellten Energie zieht die Steuereinheit 22a in dem Betriebszustand eine größere Anzahl an Aufnahmeinduktionselemente 18a zu der Energieversorgung der weiteren Einheit 20a heran als im Fall einer höheren von dem Versorgungsinduktionselement 14a bereitgestellten Energie (vgl. Fig. 3). Durch Heranziehen einer unterschiedlichen Anzahl an Aufnahmeinduktionselementen 18a hält die Steuereinheit 22a in dem Betriebszustand eine zu der Energieversorgung der weiteren Einheit 20a bereitgestellte Energie innerhalb eines Energieversorgungsspannungsintervalls 70a, welches insbesondere einer optimalen Versorgungsspannung der weiteren Einheit 20a entspricht.

In einem Vergleich zu dem Energieversorgungsspannungsintervall 70a ist im unteren Diagramm der Fig. 3 ein Spannungsintervall 72a für den Fall lediglich eines einzigen Aufnahmeinduktionselements 18a, und zwar des dritten Aufnahmeinduktionselements 18a3, dargestellt. Zu erkennen ist, dass das Spannungsintervall 72a eine wesentlich größere Amplitude aufweist als das Energieversorgungsspannungsintervall 70a und damit insbesondere eine höhere Beanspruchung von elektronischen und/oder elektrischen Objekten der Aufnahmeeinheit 16a resultieren würde.

Die Aufnahmeeinheit 16a weist im vorliegenden Ausführungsbeispiel drei Spannungsregler 24a auf (vgl. Fig. 4 und 5). Jeweils einer der Spannungsregler 24a ist mit einem der Aufnahmeinduktionselemente 18a elektrisch leitend verbunden. In Fig. 1 sind die Aufnahmeinduktionselemente 18a und die Spannungsregler 24a schematisch in einem Rechteck dargestellt, da diese in der gleichen Höhenlage angeordnet sind.

Jeder Spannungsregler 24a ist über einen Gleichrichter 74a mit dem entsprechenden Aufnahmeinduktionselement 18a elektrisch leitend verbunden. Die Aufnahmeeinheit 16a weist im vorliegenden Ausführungsbeispiel drei Gleichrichter 74a auf.

Ein erster Spannungsregler 24a1 der Spannungsregler 24a ist mit dem ersten Aufnahmeinduktionselement 18a1 elektrisch leitend verbunden. Der erste Spannungsregler 24a1 ist über einen ersten Gleichrichter 74a1 der Gleichrichter 74a mit dem ersten Aufnahmeinduktionselement 18a1 elektrisch leitend verbunden.

Ein zweiter Spannungsregler 24a2 der Spannungsregler 24a ist mit dem zweiten Aufnahmeinduktionselement 18a2 elektrisch leitend verbunden. Der zweite Spannungsregler 24a2 ist über einen zweiten Gleichrichter 74a2 der Gleichrichter 74a mit dem zweiten Aufnahmeinduktionselement 18a2 elektrisch leitend verbunden.

Ein dritter Spannungsregler 24a3 der Spannungsregler 24a ist mit dem dritten Aufnahmeinduktionselement 18a3 elektrisch leitend verbunden. Der dritte Spannungsregler 24a3 ist über einen dritten Gleichrichter 74a3 der Gleichrichter 74a mit dem dritten Aufnahmeinduktionselement 18a3 elektrisch leitend verbunden.

Die Spannungsregler 24a sind elektrisch parallel zueinander geschaltet. Die Aufnahmeeinheit 16a weist im vorliegenden Ausführungsbeispiel einen weiteren Spannungsregler 76a auf. Jeder Spannungsregler 24a ist mit dem weiteren Spannungsregler 76a elektrisch in Reihe geschaltet. Die weitere Einheit 20a ist elektrisch mit dem weiteren Spannungsregler 76a verbunden (nicht dargestellt).

Zu dem Heranziehen der unterschiedlichen Anzahl an Aufnahmeinduktionselementen 18a verändert die Steuereinheit 22a in dem Betriebszustand einen elektrischen Widerstand von zumindest einem der Spannungsregler 24a. Um einen bestimmten der Spannungsregler 24a zu der Energieversorgung der weiteren Einheit 20a heranzuziehen, setzt die Steuereinheit 22a einen elektrischen Widerstand des Spannungsreglers 24a auf einen geringeren Wert als im Fall, in welchem der bestimmte Spannungsregler 24a zu der Energieversorgung der weiteren Einheit 20a auszublenden und/oder zu deaktivieren ist.

Um einen bestimmten der Spannungsregler 24a von der Energieversorgung der weiteren Einheit 20a auszublenden und/oder zu deaktivieren, setzt die Steuereinheit 22a einen elektrischen Widerstand des Spannungsreglers 24a auf einen höheren Wert als im Fall, in welchem der bestimmte Spannungsregler 24a zu der Energieversorgung der weiteren Einheit 20a heranzuziehen ist.

Neben den Aufnahmeinduktionselementen 18a weist die Aufnahmeeinheit 16a mehrere weitere Aufnahmeinduktionselemente 26a auf (vgl. Fig. 1). Die Aufnahmeinduktionselemente 26a sind in Fig.1 lediglich schematisch in Form eines Rechtecks dargestellt. Von den weiteren Aufnahmeinduktionselementen 26a wird im Folgenden lediglich eines beschrieben.

In einem weiteren Betriebszustand ermittelt und optimiert die Steuereinheit 22a mittels des weiteren Aufnahmeinduktionselements 26a eine Position der Aufnahmeeinheit 16a relativ zu dem Versorgungsinduktionselement 14a. Die Steuereinheit 22a ermittelt und optimiert in dem weiteren Betriebszustand mittels des weiteren Aufnahmeinduktionselements 26a eine Position der Aufnahmeeinheit 16a in einer parallel zu einer Haupterstreckungsebene der Aufstellplatte 36a ausgerichteten Ebene relativ zu dem Versorgungsinduktionselement 14a.

Im vorliegenden Ausführungsbeispiel sind die Aufnahmeinduktionselemente 18a und das weitere Aufnahmeinduktionselement 26a voneinander verschieden ausgebildet. Das weitere Aufnahmeinduktionselement 26a ist zu einem Großteil innerhalb der Gehäuseeinheit 42a integriert. Bei einer senkrechten Betrachtung auf eine Haupterstreckungsebene zumindest eines der Aufnahmeinduktionselemente 18a sind die Aufnahmeinduktionselemente 18a und das weitere Aufnahmeinduktionselement 26a überlappend zueinander angeordnet.

Die Aufnahmeinduktionselemente 18a und das weitere Aufnahmeinduktionselement 26a sind in dem Betriebszustand in unterschiedlichen Höhenlagen relativ zu der Aufstellplatte 36a und/oder zu dem Versorgungsinduktionselement 14a und/oder zu einem Gehäuseboden der Gehäuseeinheit 42a angeordnet. In dem Betriebszustand weisen die Aufnahmeinduktionselemente 18a und das weitere Aufnahmeinduktionselement 26a unterschiedliche Abstände zu dem Versorgungsinduktionselement 14a auf.

In einem Verfahren zu einem Betrieb des Induktionsenergieübertragungssystems 10a wird die weitere Einheit 20a mit Energie versorgt, und zwar insbesondere mittels einer von dem Versorgungsinduktionselement 14a bereitgestellten und von den Aufnahmeinduktionselementen 18a aufgenommenen Energie. In Abhängigkeit einer von dem Versorgungsinduktionselement 14a bereitgestellten Energie wird eine unterschiedliche Anzahl an Aufnahmeinduktionselementen 18a zu der Energieversorgung der weiteren Einheit 20a herangezogen.

In Fig. 6 bis 9 sind zwei weitere Ausführungsbeispiele der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des Ausführungsbeispiels der Fig. 1 bis 5 verwiesen werden kann. Zur Unterscheidung der Ausführungsbeispiele ist der Buchstabe a in den Bezugszeichen des Ausführungsbeispiels in den Fig. 1 bis 5 durch die Buchstaben b und c in den Bezugszeichen des Ausführungsbeispiels der Fig. 6 bis 9 ersetzt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Fig. 1 bis 5 verwiesen werden.

Fig. 6 zeigt drei Aufnahmeinduktionselemente 18b einer Aufnahmeeinheit 16b eines alternativen Induktionsenergieübertragungssystems 10b. Die Aufnahmeinduktionselemente 18b sind Teil dreier verschiedener Sekundärspulen 28b, 30b, 32b. Jedes Aufnahmeinduktionselement 18b ist Teil einer eigenen Sekundärspule 28b, 30b, 32b und bildet insbesondere die jeweilige Sekundärspule 28b, 30b, 32b aus. Die Aufnahmeinduktionselemente 18b unterscheiden sich jeweils in einer Eigenschaft.

In dem in Fig. 6 dargestellten Beispiel unterscheiden sich die Aufnahmeinduktionselemente 18b jeweils in einer Windungszahl. Ein Durchmesser der Aufnahmeinduktionselemente 18b ist im Wesentlichen identisch. Die Aufnahmeinduktionselemente 18b sind benachbart zueinander angeordnet.

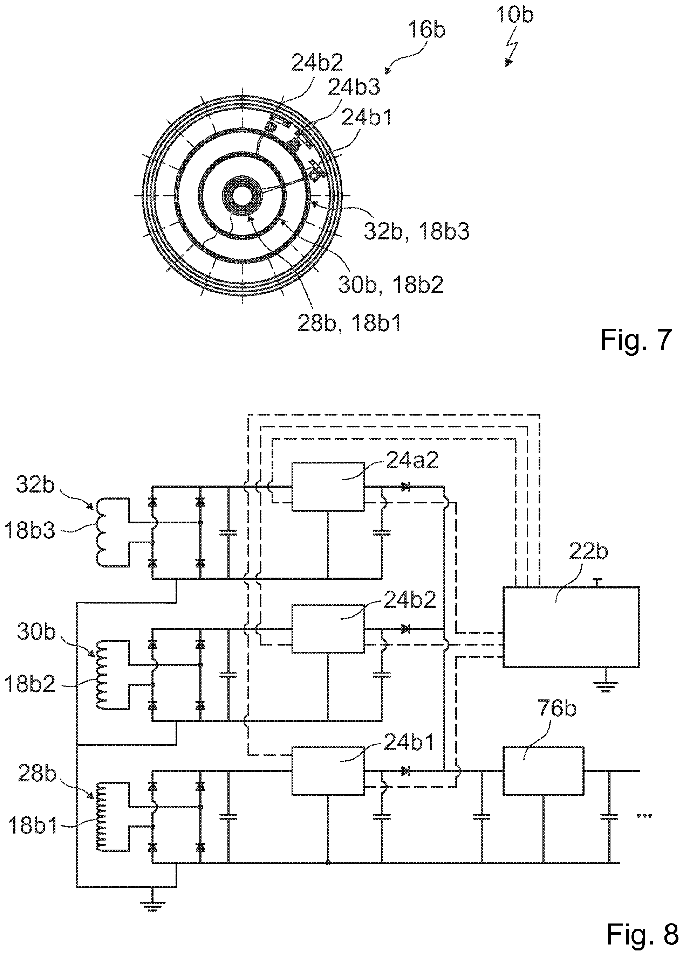

Alternativ könnten die Aufnahmeinduktionselemente 18b sich in einem Durchmesser unterscheiden, wie dies insbesondere in Fig. 7 dargestellt ist. Eine Windungszahl der Aufnahmeinduktionselemente 18b könnte insbesondere im Wesentlichen identisch sein. Die Aufnahmeinduktionselemente 18b sind konzentrisch relativ zueinander angeordnet.

In einem Betriebszustand sind die Aufnahmeinduktionselemente 18b in einer gemeinsamen Höhenlage relativ zu einem Versorgungsinduktionselement 14b einer Versorgungseinheit 12b des Induktionsenergieübertragungssystems 10b angeordnet. Die Aufnahmeinduktionselemente 18b sind elektrisch parallel zueinander geschaltet (vgl. Fig. 8). Ein weiterer Aufbau eines Schaltdiagramms entspricht im Wesentlichen dem Schaltdiagramm, welches zu den Fig. 1 bis 5 beschrieben wurde, weshalb an dieser Stelle auf die vorangegangene Beschreibung verwiesen wird.

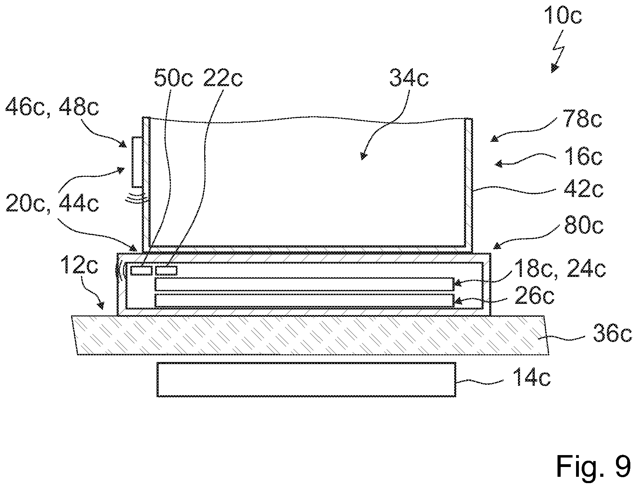

Fig. 9 zeigt ein alternatives Induktionsenergieübertragungssystem 10c mit einer als Kochfeld ausgebildeten Versorgungseinheit 12c und mit einer als Aufstelleinheit ausgebildeten Aufnahmeeinheit 16c. Die Aufnahmeeinheit 16c weist ein Gargeschirr 78c und eine Unterlegeinheit 80c auf. Die Unterlegeinheit 80c ist zu einem Aufstellen des Gargeschirrs 78c vorgesehen. Die Unterlegeinheit 80c ist zu einer Anordnung zwischen einer Aufstellplatte 36c und dem Gargeschirr 78c vorgesehen.

Objekte der Aufnahmeeinheit 16c, wie beispielsweise Aufnahmeinduktionselemente 18c und/oder zumindest ein weiteres Aufnahmeinduktionselement 26c und/oder eine Steuereinheit 22c und/oder eine weitere Einheit 20c und/oder Spannungsregler 24c, sind teilweise und vorteilhaft zu einem Großteil innerhalb der Unterlegeinheit 80c integriert.

### Bezugszeichen

- 10: I nduktionsenergieübertragungssystem
- 12: Versorgungseinheit
- 14: Versorgungsinduktionselement
- 16: Aufnahmeeinheit
- 18: Aufnahmeinduktionselement
- 20: Weitere Einheit
- 22: Steuereinheit
- 24: Spannungsregler
- 26: Weiteres Aufnahmeinduktionselement
- 28: Sekundärspule
- 30: Sekundärspule
- 32: Sekundärspule
- 34: Aufnahmeraum
- 36: Aufstellplatte
- 38: Versorgungs-Bedienerschnittstelle
- 40: Versorgungs-Steuereinheit
- 42: Gehäuseeinheit
- 44: Bedienerschnittstelle
- 46: Eingabeeinheit
- 48: Ausgabeeinheit
- 50: Bedienelektronik
- 52: Ordinatenachse
- 54: Abszissenachse
- 56: Ordinatenachse
- 58: Abszissenachse
- 60: Ordinatenachse
- 62: Abszissenachse
- 64: Spannungskurve
- 66: Spannungskurve
- 68: Spannungskurve
- 70: Energieversorgungsspannungsintervall
- 72: Spannungsintervall
- 74: Gleichrichter
- 76: Weiterer Spannungsregler
- 78: Gargeschirr
- 80: Unterlegeinheit

## Patentansprüche

1. Induktionsenergieübertragungssystem mit zumindest einer als Aufstelleinheit ausgebildeten Aufnahmeeinheit (16a-c), welche zumindest zwei Aufnahmeinduktionselemente (18a-c) aufweist, die zu einem Empfang von Energie von zumindest einem Versorgungsinduktionselement (14a-c) zumindest einer Versorgungseinheit (12a-c) vorgesehen sind und welche zu einer Energieversorgung zumindest einer weiteren Einheit (20a-c) vorgesehen sind, **gekennzeichnet durch** eine Steuereinheit (22a-c), welche dazu vorgesehen ist, in Abhängigkeit einer von dem Versorgungsinduktionselement (14a-c) bereitgestellten Energie eine unterschiedliche Anzahl an Aufnahmeinduktionselementen (18a-c) zu der Energieversorgung der weiteren Einheit (20a-c) heranzuziehen.

2. Induktionsenergieübertragungssystem nach Anspruch 1, **dadurch gekennzeichnet, dass** die Aufnahmeeinheit (16a-c) zumindest zwei Spannungsregler (24a-c) aufweist, welche jeweils mit einem der Aufnahmeinduktionselemente (18a-c) elektrisch leitend verbunden sind.

3. Induktionsenergieübertragungssystem nach Anspruch 2, **dadurch gekennzeichnet, dass** die Steuereinheit (22a-c) in wenigstens einem Betriebszustand einen elektrischen Widerstand von zumindest einem der Spannungsregler (24a-c) verändert.

4. Induktionsenergieübertragungssystem nach einem der vorhergehenden Ansprüche, **dadurch gekennzeichnet, dass** die Aufnahmeeinheit (16a-c) zumindest ein weiteres Aufnahmeinduktionselement (26a-c) aufweist, wobei die Steuereinheit (22a-c) in wenigstens einem Betriebszustand mittels des weiteren Aufnahmeinduktionselements (26a-c) eine Position der Aufnahmeeinheit (16a-c) relativ zu dem Versorgungsinduktionselement (14a-c) ermittelt.

5. Induktionsenergieübertragungssystem nach Anspruch 4, **dadurch gekennzeichnet, dass** die Aufnahmeinduktionselemente (18a-c) und das weitere Aufnahmeinduktionselement (26a-c) voneinander verschieden ausgebildet sind.

6. Induktionsenergieübertragungssystem nach Anspruch 5, **dadurch gekennzeichnet, dass** die Aufnahmeinduktionselemente (18a-c) und das weitere Aufnahmeinduktionselement (26a-c) in dem Betriebszustand unterschiedliche Abstände zu dem Versorgungsinduktionselement (14a-c) aufweisen.

7. Induktionsenergieübertragungssystem nach einem der vorhergehenden Ansprüche, **dadurch gekennzeichnet, dass** die Aufnahmeinduktionselemente (18a) Teil einer gemeinsamen Sekundärspule (28a) sind.

8. Induktionsenergieübertragungssystem nach einem der Ansprüche 1 bis 7, **dadurch gekennzeichnet, dass** die Aufnahmeinduktionselemente (18b) Teil zumindest zweier verschiedener Sekundärspulen (28b, 30b, 32b) sind.

9. Induktionsenergieübertragungssystem nach einem der vorhergehenden Ansprüche, **dadurch gekennzeichnet, dass** die Aufnahmeeinheit (16a-c) die weitere Einheit (20a-c) aufweist, welche eine von der Steuereinheit (22a-c) verschiedene Elektronikeinheit ist.

10. Induktionsenergieübertragungssystem nach einem der vorhergehenden Ansprüche, **gekennzeichnet durch** die Versorgungseinheit (12a-c), welche als ein Kochfeld ausgebildet ist.

11. Induktionsenergieübertragungssystem nach einem der vorhergehenden Ansprüche, **dadurch gekennzeichnet, dass** die Aufnahmeeinheit (16a-c) als eine Aufstelleinheit ausgebildet ist, welche zumindest einen Aufnahmeraum (34a-c) zu einer Aufnahme von Lebensmitteln aufweist.

12. Verfahren zum Betrieb eines Induktionsenergieübertragungssystems (10a-c), welches zumindest eine als Aufstelleinheit ausgebildete Aufnahmeeinheit (16a-c) aufweist, welche zumindest zwei Aufnahmeinduktionselemente (18a-c) aufweist, die zu einem Empfang von Energie von zumindest einem Versorgungsinduktionselement (14a-c) zumindest einer Versorgungseinheit (12a-c) vorgesehen sind und welche zu einer Energieversorgung zumindest einer weiteren Einheit (20a-c) vorgesehen sind, **dadurch gekennzeichnet, dass** in Abhängigkeit einer von dem Versorgungsinduktionselement (14a-c) bereitgestellten Energie eine unterschiedliche Anzahl an Aufnahmeinduktionselementen (18a-c) zu der Energieversorgung der weiteren Einheit (20a-c) herangezogen wird.

## Claims

1. Induction energy transmission system with at least one receiving unit (16a-c) which is designed as a set-down unit and which has at least two receiving induction elements (18a-c) which are provided so as to receive energy from at least one supply induction element (14a-c) of at least one supply unit (12a-c) and which are provided so as to supply energy to at least one further unit (20a-c), **characterised by** a control unit (22a-c), which is provided so as to use a different number of receiving induction elements (18a-c) in order to supply energy to the further unit (20a-c) as a function of the energy provided by the supply induction element (14a-c).

2. Induction energy transmission system according to claim 1, **characterised in that** the receiving unit (16a-c) has at least two voltage regulators (24a-c), which are each connected in an electrically conductive manner to one of the receiving induction elements (18a-c).

3. Induction energy transmission system according to claim 2, **characterised in that** in at least one operating state the control unit (22a-c) changes an electrical resistance of at least one of the voltage regulators (24a-c).

4. Induction energy transmission system according to one of the preceding claims, **characterised in that** the receiving unit (16a-c) has at least one further receiving induction element (26a-c), wherein in at least one operating state the control unit (22a-c) determines a position of the receiving unit (16a-c) relative to the supply induction element (14a-c) by means of the further receiving induction element (26a-c).

5. Induction energy transmission system according to claim 4, **characterised in that** the receiving induction elements (18a-c) and the further receiving induction element (26a-c) are designed differently from one another.

6. Induction energy transmission system according to claim 5, **characterised in that** in the operating state the receiving induction elements (18a-c) and the further receiving induction element (26a-c) have different distances to the supply induction element (14a-c).

7. Induction energy transmission system according to one of the preceding claims, **characterised in that** the receiving induction elements (18a) are part of a common secondary coil (28a).

8. Induction energy transmission system according to one of claims 1 to 7, **characterised in that** the receiving induction elements (18b) are part of at least two different secondary coils (28b, 30b, 32b).

9. Induction energy transmission system according to one of the preceding claims, **characterised in that** the receiving unit (16a-c) has the further unit (20a-c), which is an electronic unit that is different from the control unit (22a-c).

10. Induction energy transmission system according to one of the preceding claims, **characterised by** the supply unit (12a-c) which is designed as a cooktop.

11. Induction energy transmission system according to one of the preceding claims, **characterised in that** the receiving unit (16a-c) is designed as a set-down unit which has at least one receiving space (34a-c) so as to receive food.

12. Method for operating an induction energy transmission system (10a-c) which has at least one receiving unit (16a-c) which is designed as a set-down unit and which has at least two receiving induction elements (18a-c), which are provided so as to receive energy from at least one supply induction element (14a-c) of at least one supply unit (12a-c) and which are provided so as to supply energy to at least one further unit (20a-c), **characterised in that**, depending on the energy provided by the supply induction element (14a-c), a different number of receiving induction elements (18a-c) is used so as to supply energy to the further unit (20a-c).

## Revendications

1. Système de transmission d'énergie par induction comprenant au moins une unité de réception (16a-c) conçue comme unité d'installation présentant au moins deux éléments d'induction de réception (18a-c) prévus afin de recevoir de l'énergie d'au moins un élément d'induction d'alimentation (14a-c) d'au moins une unité d'alimentation (12a-c) et prévus afin d'alimenter en énergie au moins une unité (20a-c) supplémentaire, **caractérisé par** une unité de commande (22a-c) prévue afin d'utiliser un nombre différent d'éléments d'induction de réception (18a-c) pour l'alimentation en énergie de l'unité (20a-c) supplémentaire en fonction de l'énergie fournie par l'élément d'induction d'alimentation (14a-c).

2. Système de transmission d'énergie par induction selon la revendication 1, **caractérisé en ce que** l'unité de réception (16a-c) présente au moins deux régulateurs de tension (24a-c) qui sont reliés de manière électriquement conductrice respectivement à un des éléments d'induction de réception (18a-c).

3. Système de transmission d'énergie d'induction selon la revendication 2, **caractérisé en ce que,** dans au moins un état de fonctionnement, l'unité de commande (22a-c) modifie une résistance électrique d'au moins un des régulateurs de tension (24a-c).

4. Système de transmission d'énergie par induction selon l'une quelconque des revendications précédentes, **caractérisé en ce que** l'unité de réception (16a-c) présente au moins un élément d'induction de réception (26a-c) supplémentaire, dans lequel, dans au moins un état de fonctionnement, l'unité de commande (22a-c) détermine une position de l'unité de réception (16a-c) par rapport à l'élément d'induction d'alimentation (14a-c) au moyen de l'élément d'induction de réception (26a-c) supplémentaire.

5. Système de transmission d'énergie par induction selon la revendication 4, **caractérisé en ce que** les éléments d'induction de réception (18a-c) et l'élément d'induction de réception (26a-c) supplémentaire sont conçus différemment les uns des autres.

6. Système de transmission d'énergie par induction selon la revendication 5, **caractérisé en ce que,** dans l'état de fonctionnement, les éléments d'induction de réception (18a-c) et l'élément d'induction de réception (26a-c) supplémentaire présentent des distances différentes par rapport à l'élément d'induction d'alimentation (14a-c).

7. Système de transmission d'énergie par induction selon l'une quelconque des revendications précédentes, **caractérisé en ce que** les éléments d'induction de réception (18a) font partie d'une bobine secondaire (28a) commune.

8. Système de transmission d'énergie par induction selon l'une quelconque des revendications 1 à 7, **caractérisé en ce que** les éléments d'induction de réception (18b) font partie d'au moins deux bobines secondaires (28b, 30b, 32b) différentes.

9. Système de transmission d'énergie par induction selon l'une quelconque des revendications précédentes, **caractérisé en ce que** l'unité de réception (16a-c) présente l'unité (20a-c) supplémentaire, qui est une unité électronique différente de l'unité de commande (22a-c).

10. Système de transmission d'énergie par induction selon l'une quelconque des revendications précédentes, **caractérisé par** l'unité d'alimentation (12a-c) conçue comme une plaque de cuisson.

11. Système de transmission d'énergie par induction selon l'une quelconque des revendications précédentes, **caractérisé en ce que** l'unité de réception (16a-c) est conçue comme une unité d'installation présentant au moins un espace de réception (34a-c) permettant de recevoir des produits alimentaires.

12. Procédé de fonctionnement d'un système de transmission d'énergie par induction (10a-c), qui présente au moins une unité de réception (16a-c) conçue comme une unité d'installation et présentant au moins deux éléments d'induction de réception (18a-c) prévus afin de recevoir de l'énergie d'au moins un élément d'induction d'alimentation (14a-c) d'au moins une unité d'alimentation (12a-c) et prévus afin d'alimenter en énergie au moins une unité (20a-c) supplémentaire, **caractérisé en ce que,** en fonction d'une énergie fournie par l'élément d'induction d'alimentation (14a-c), un nombre différent d'éléments d'induction de réception (18a-c) sont utilisés afin d'alimenter en énergie l'unité (20a-c) supplémentaire.
